# EUROPÄISCHE PATENTSCHRIFT

(11) **EP 0 731 541 B1**
(45) Veröffentlichungstag und Bekanntmachung des Hinweises auf die Patenterteilung: **16.09.1998**
(21) Anmeldenummer: 95120375.1
(22) Anmeldetag: 22.12.1995
(51) Int. Cl.: H02G 3/06, H01R 13/59

(54) **Verschraubung, insb. für Kabel**
Screw fitting for cable
Joint fileté pour câble

(30) Priorität: 22.02.1995 DE 19506064
(43) Veröffentlichungstag der Anmeldung: 11.09.1996
(73) Patentinhaber: BOPLA GEHÄUSE SYSTEME GmbH, D-32257 Bünde (DE)
(72) Erfinder: Niehausmeier, Uwe, D-32289 Rödinghausen (DE)
(74) Vertreter: Patentanwälte Dipl.-Ing. Bodo Thielking Dipl.-Ing. Otto Elbertzhagen

(56) Entgegenhaltungen:
- EP-A- 0 203 264
- EP-A- 0 203 269
- FR-A- 2 579 837

## Beschreibung

Die Erfindung betrifft eine Verschraubung zur Ein- und Durchführung, Abdichtung und Zugentlastung von Kabeln, Leitungen oder Schläuchen, mit einem Gehäuseteil, das eine zentrale, axial verlaufende Durchgangsbohrung aufweist, ferner einen koaxialen Gewindebereich und in Achsrichtung verlaufende Klemmlamellen, die mittels einer mit dem Gewindebereich verschraubbaren Klemmutter radial einwärts zur Anlage an die Außenwand des Kabels od. dgl. verschiebbar sind, wobei die Klemmlamellen achsparallele Stirnflächen aufweisen, die unter einem Winkel angeordnet sind, der von dem Winkel einer Ebene abweicht, die radial durch die Mittelachse des Gehäuseteils verläuft.

Derartige Kabelverschraubungen sind in den unterschiedlichsten Ausführungsformen bekannt (z.B. EP-A-0 203 264). Bei allen bekannten Kabelverschraubungen sind die die Klemmlamellen aufweisenden Klemmkäfige so ausgebildet, daß zwischen den Stirnflächen benachbarter Klemmlamellen im entspannten Zustand stets ein gewisser Abstand verbleibt. Dieser vorhandene Abstand hat seine Ursache in der Fertigung, nämlich beim Spritzgießen. Der bisher unvermeidliche Abstand hat zur Folge, daß die Klemmutter erst einen gewissen Leerweg zurücklegen muß, bevor die Stirnflächen benachbarter Klemmlamellen beim Verschraubungsvorgang direkt aneinander stoßen und dann beim weiteren Verdrehen einwärts wandern. Dieser Leerweg der Klemmutter ist nachteilig.

Der Erfindung liegt die Aufgabe zugrunde, eine Verschraubung der als bekannt vorausgesetzten Art so auszubilden, daß die Klemmutter zum Verschieben der Klemmlamellen in Richtung auf das durchgeführte Kabel od. dgl. keinen Leerweg zurücklegen muß, sondern daß bereits mit Beginn des Drehvorgangs der Klemmutter die Lamellen einwärts zu wandern beginnen und sich fächerförmig übereinander legen.

Die Lösung dieser Aufgabe erfolgt bei einer Verschraubung der eingangs erwähnten Art dadurch, daß die Stirnflächen benachbarter Klemmlamellen im unverklemmten Zustand zumindest mit Teilbereichen unmittelbar aneinanderliegen.

Es hat sich als zweckmäßig erwiesen, daß der Winkel bzw. die Winkel, unter dem die achsparallelen Stirnflächen von durch die Mittelachse des Gehäuseteils radial verlaufenden Ebenen abweicht, bei sämtlichen Klemmlamellen zumindest annähernd gleich ist bzw. sind.

Bevorzugte weitere Ausgestaltungen der Erfindung sind in den weiteren Unteransprüchen beschrieben.

Die erfindungsgemäße Verschraubung hat den Vorteil, daß die Klemmlamellen sich von Beginn der Verdrehung der Klemmutter an fächerförmig übereinander legen und daß die Klemmutter keinen Leerweg zurücklegen muß. Hierdurch wird ermöglicht, daß eine Kabelverschraubung für einen größeren Bereich von unterschiedlichen Klemmdurchmessern verwendbar ist.

Nachstehend werden bevorzugte Ausführungsformen der Erfindung anhand der Zeichnung im einzelnen beschrieben. Es zeigen:
- Figur 1 -: eine perspektivische Ansicht eines Gehäuseteils einer Verschraubung mit einem ungeschlitzten Klemmringbereich,
- Figur 2 -: die Darstellung gemäß Figur 1 mit einem durch schräge Schlitze aus dem Klemmring gebildeten Klemmlamellen,
- Figur 3 -: eine Explosionsdarstellung einer vollständigen Verschraubung mit Dichtungsring, Klemmmutter und dem in Figur 2 dargestellten Gehäuseteil,
- Figur 4 -: eine Explosionsdarstellung einer zweiten Ausführungsform eines Gehäuseteils,
- Figur 5 -: das in Figur 4 dargestellte Gehäuseteil im Zusammenbauzustand.
- Figur 6 -: eine perspektivische Explosionsdarstellung einer weiteren Ausführung eines zweiteiligen Gehäuseteils.

In den Zeichnungen sind gleiche oder einander entsprechende Teile mit gleichen Bezugszeichen versehen, die sich bedarfsweise durch Hochstriche voneinander unterscheiden.

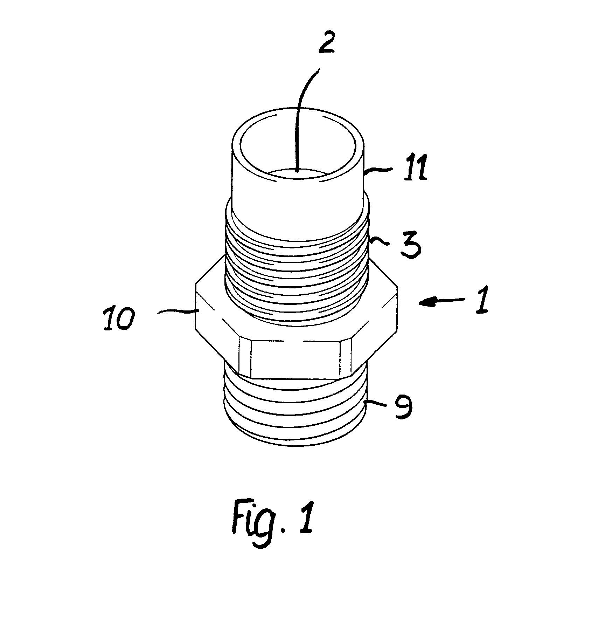

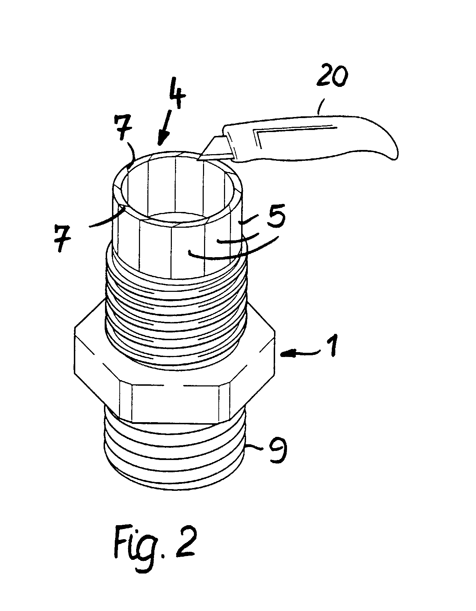

### Zunächst zur Ausführungsform gemäß Figuren 1 bis 3:

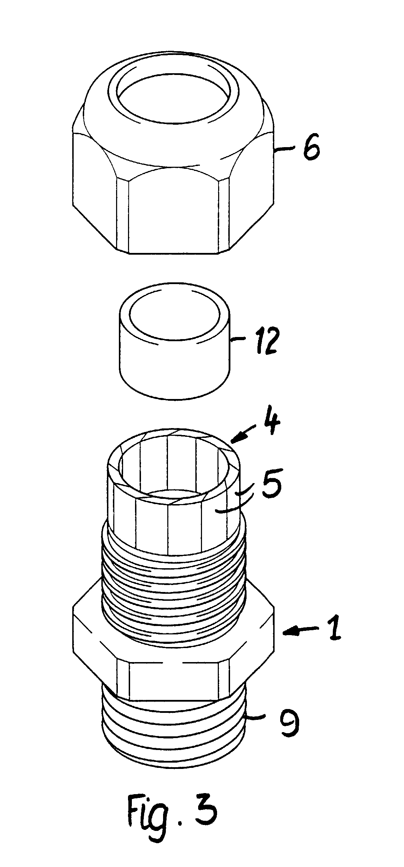

Ein Gehäuseteil 1 ist als Kunststoffspritzgußteil ausgebildet. Es besitzt ein Außengewinde 9, einen Sechskant 10, eine Durchgangsbohrung 2 und einen dazu koaxialen äußeren Gewindebereich 3. Oberhalb des koaxialen Gewindebereichs 3 ist ein Lamellenringbereich 11 vorgesehen. Dieser Lamellenringbereich 11 wird durch schräg liegende, jedoch achsparallele Schnitte in Längsachsenrichtung geteilt mit der Folge, daß sich voneinander getrennte, an ihrem unteren Ende jedoch miteinander verbundene Klemmlamellen 5 ergeben, die gemeinsam einen Klemmkäfig 4 bilden. Die Stirnflächen 7 der Klemmlamellen 5 weichen ab von radial durch die Mittelachse des Gehäuseteils 1 gelegten Ebenen. Dies hat zur Folge, daß beim Aufschrauben der Klemmutter 6 auf den Gewindebereich 3 die Klemmlamellen 5 einander fächerartig übergreifen und gemeinsam zum Zentrum wandern. In Figur 3 ist zusätzlich zur Klemmutter 6 und zum Gehäuseteil 1 noch der Dichtungsring 12 gezeigt, der in das Gehäuseteil 1 so eingeschoben wird, daß er am unteren Ende der Klemmlamellen 5 beginnt.

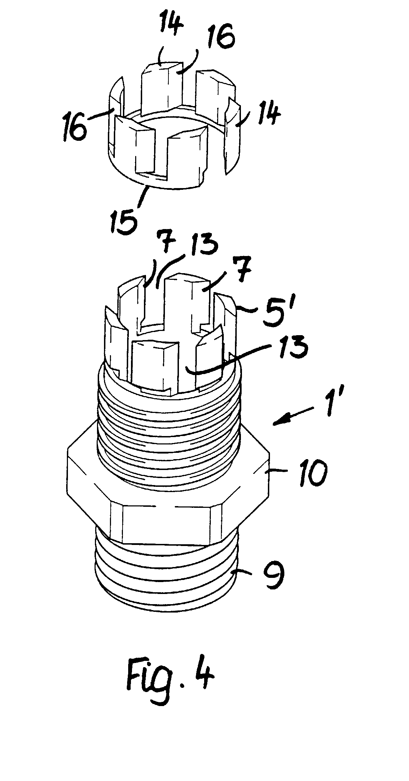

Bei der Ausführungsform gemäß Figur 4 ist zwischen zwei benachbarten Klemmlamellen 5' jeweils eine Lücke 13 gelassen und damit nur jede zweite Klemmlamelle 5' an das Gehäuseteil 1 angeformt.

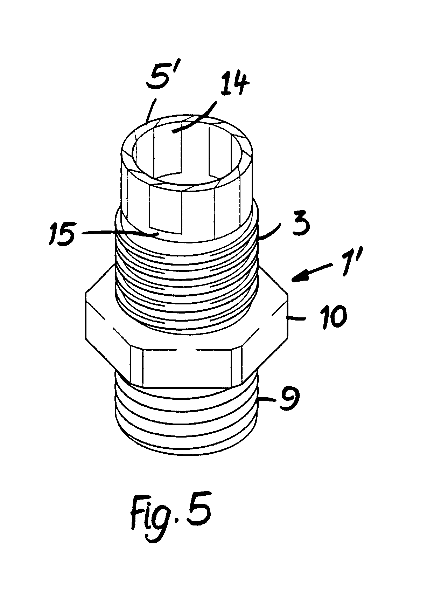

Die freigebliebenen Lücken 13 werden ausgefüllt durch Zwischenlamellen 14, die über einen gemeinsamen unteren Ringbereich 15 verbunden sind. Der geteilte Ring 15 wird aufgebogen und die Zwischenlamellen 14 werden in die Lücken 13 eingefügt. Es entsteht dann das in Figur 5 sichtbare Bild. Dabei liegen die Stirnflächen 16 der Zwischenlamellen 14 an den Stirnflächen 7 der Klemmlamellen 5' an.

Die Herstellung der Ausführungsform gemäß Figur 1 erfolgt in der Weise, daß mittels eines nur beispielhaft dargestellten Messers 20 achsparallele Schnitte zur Bildung der Stirnflächen 7 gelegt werden, nachdem der Klemmringbereich 11 am Gehäuseteil 1 zunächst geschlossen umläuft.

Die Herstellung der Ausführungsform gemäß Figuren 4 und 5 kann entweder in zwei getrennten Werkzeugen erfolgen, bei der ein Werkzeug das Gehäuseteil 1' erzeugt und ein zweites Werkzeug die Zwischenlamellen 14 mit Ring 15. Diese Ausführungsform kann jedoch auch in der Weise hergestellt werden, daß im Zwei-Komponenten-Spritzgußverfahren nacheinander zunächst das Gehäuseteil 1' und danach im gleichen Werkzeug als zweite Komponente der Ring 15 mit den Zwischenlamellen gespritzt werden.

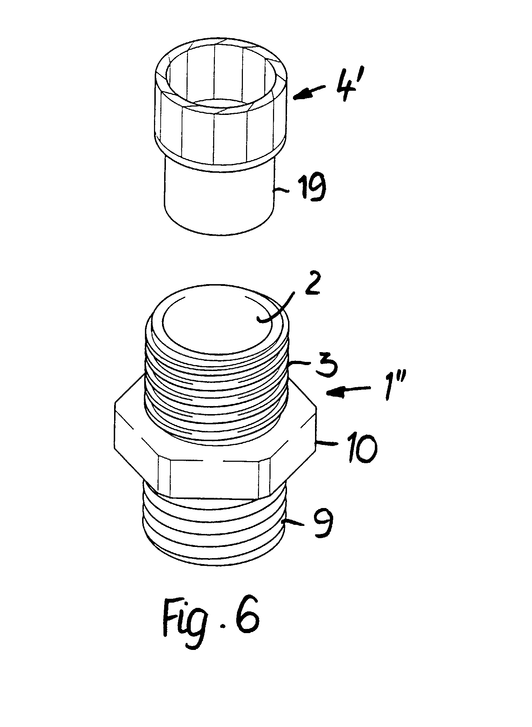

Bei der Ausführungsform gemäß Figur 6 ist an den Klemmkäfig 4' ein ringförmiger Ansatz 19 angeformt, der in die Zentralbohrung 2 eingesetzt ist. Bei dieser Ausführungsform ist also das Gehäuseteil 1" zweiteilig ausgebildet.

## Patentansprüche

1. Verschraubung zur Ein- und Durchführung, Abdichtung und Zugentlastung von Kabeln, Leitungen oder Schläuchen, mit einem Gehäuseteil (1), das eine zentrale, axial verlaufende Durchgangsbohrung (2) aufweist, ferner einen koaxialen Gewindebereich (3) und in Achsrichtung verlaufende Klemmlamellen (5), die mittels einer mit dem Gewindebereich verschraubbaren Klemmutter (6) radial einwärts zur Anlage an die Außenwand des Kabels od. dgl. verschiebbar sind, wobei die Klemmlamellen (5) achsparallele Stirnflächen (7) aufweisen, die unter einem Winkel angeordnet sind, der von dem Winkel einer Ebene abweicht, die radial durch die Mittelachse (8) des Gehäuseteils (1) verläuft,
dadurch gekennzeichnet,
daß die Stirnflächen (7) benachbarter Klemmlamellen (5) im unverklemmten Zustand zumindest mit Teilbereichen unmittelbar aneinanderliegen.

2. Verschraubung nach Anspruch 1,
dadurch gekennzeichnet,
daß der Winkel bzw. die Winkel, unter dem die achsparallelen Stirnflächen (7) von durch die Mittelachse (8) des Gehäuseteils (1) radial verlaufenden Ebenen abweicht, bei sämtlichen Klemmlamellen (5) zumindest annähernd gleich ist bzw. sind.

3. Verschraubung nach Anspruch 1 oder 2,
dadurch gekennzeichnet,
daß der Winkel, unter dem die achsparallelen Stirnflächen (7) der Klemmlamellen (5) von der radialen Ebene durch die Mittelachse (8) abweichen, jeweils zur gleichen Umfangsrichtung hin abweicht.

4. Verschraubung nach einem oder mehreren der Ansprüche 1 bis 3,
dadurch gekennzeichnet,
daß im Gehäuseteil (1) zwischen zwei angeformten Klemmlamellen (5) jeweils eine Lücke (13) für eine Zwischenlamelle (14) vorgesehen ist und die Lücken (13) durch passende separate Zwischenlamellen (14) ausgefüllt sind.

5. Verschraubung nach Anspruch 4,
dadurch gekennzeichnet,
daß die passenden Zwischenlamellen (14) an einem gemeinsamen zusätzlichen Kunststoffteil sitzen.

6. Verschraubung nach Anspruch 5,
dadurch gekennzeichnet,
daß das zusätzliche Kunststoffteil einen die Zwischenlamellen (14) miteinander verbindenden gemeinsamen Ringbereich (15) aufweist.

7. Verschraubung nach einem oder mehreren der Ansprüche 1 bis 6,
dadurch gekennzeichnet,
daß die Stirnflächen (7) eben sind.

8. Verschraubung nach einem oder mehreren der Ansprüche 1 bis 6,
dadurch gekennzeichnet,
daß die Stirnflächen (7) gebogen sind.

9. Verfahren zur Herstellung einer Verschraubung nach einem oder mehreren der Ansprüche 1 bis 8,
dadurch gekennzeichnet,
daß das Gehäuseteil (1) als Kunststoffspritzgußteil mit einem geschlossenen Lamellenringbereich hergestellt wird, der mittels in Achsrichtung gelegter Schnitte (16) in die Klemmlamellen (5) unterteilt wird.

10. Verfahren zur Herstellung einer Verschraubung nach einem oder mehreren der Ansprüche 1 bis 8,
dadurch gekennzeichnet,
daß das Gehäuseteil (1) einerseits und die Zwischenlamellen (14) andererseits nacheinander im Zwei-Komponenten-Kunststoffspritzguß hergestellt werden.

## Claims

1. Screw fitting for guiding in and guiding out, sealing and tension relieving of cables, pipes or hoses, with a housing part (1) that has a central, axially extending through bore (2), as well as a coaxial threaded region (3) and clamping segments (5) extending in an axial direction which are displaceable inwards for contact with the outer wall of the cable or the like by means of a clamping nut (6) screwable onto the threaded region, wherein the clamping segments (5) have axially parallel edge faces (7) which are arranged at an angle which deviates from the angle of a plane which extends radially through the central axis (8) of the housing part (1),
characterised in that
the edge faces (7) of neighbouring clamping segments (5) in the unclamped state have at least partial regions which lie directly against one another.

2. Screw fitting according to Claim 1,
characterised in that
the angle or angles at which the axially parallel edge faces (7) deviate from the radially extending plane through the central axis (8) of the housing part (1) is/are approximately the same for each and every clamping segment (5).

3. Screw fitting according to Claim 1 or 2,
characterised in that
the angle by which the axially parallel edge faces (7) of the clamping segments (5) deviate from the radial plane through the middle axis (8) deviate in each case in the same circumferential direction.

4. Screw fitting according to one or more of the Claims to 3,
characterised in that
in the housing part (1) a gap (13) for an intermediate segment (14) is provided between two deformable clamping segments (5), and the gaps (13) are filled by separate mating intermediate segments (14).

5. Screw fitting according to Claim 4,
characterised in that
the mating intermediate segments (14) sit on a common additional plastic part.

6. Screw fitting according to Claim 5,
characterised in that
the additional plastic part has a common annular region (15) which connects the intermediate segments with one another.

7. Screw fitting according to one or more of Claims 1 to 6,
characterised in that
the edge faces (7) are flat.

8. Screw fitting according to one or more of Claims 1 to 6, characterised in that
the edge faces (7) are curved.

9. Method for manufacturing a screw fitting according to one or more of Claims 1 to 8,
characterised in that
the housing part (1) is manufactured as a plastics injection moulded part with a closed segment annulus region which is sub-divided into clamping segments by means of cuts (16) introduced in an axial direction.

10. Method for manufacturing a screw fitting according to one or more of Claims 1 to 8,
characterised in that
the housing part (1) on the one hand and the intermediate segments (14) on the other hand are manufactured one after another in two component plastics injection moulding.

## Revendications

1. Joint fileté pour l'insertion, le passage, l'étanchéification et la décharge de traction de câbles, de conduites ou de tuyaux, composé d'un boîtier (1) qui présente un alésage de passage (2) s'étendant axialement, d'un filet coaxial (3) et de lamelles de serrage (5) s'étendant dans le sens axial, lesquelles peuvent être déplacées radialement, vers l'intérieur, en direction de l'installation, sur la paroi externe du câble, tuyau etc., à l'aide d'un écrou de serrage (6) se vissant sur le filet (3), les lamelles (5) présentant des surfaces frontales (7) axialement parallèles et étant disposées sous un angle qui diverge de l'angle d'un niveau qui, s'étendant radialement, traverse l'axe médian (8) du boîtier (1),
caracterisé en ce que
les surfaces frontales (7) des lamelles de serrage voisines (5) portent, à l'état non serré directement les unes contre les autres, tout au moins partiellement.

2. Joint fileté selon la revendication 1,
caractérisé en ce que
l'angle/les angles, sous lequel/lesquels les surfaces frontales (7) divergent des niveaux qui traversent, radialement, l'axe médian (8) du boîtier (1), est/sont, au moins sensiblement, le/les mêmes pour toutes les lamelles (5).

3. Joint fileté selon la revendication 1 ou 2,
caractérisé en ce que
l'angle, sous lequel les surfaces frontales (7) à axes parallèles des lamelles de serrage (5) divergent du niveau radial traversant l'axe médian (8), diverge dans la même direction circonférentielle.

4. Joint fileté l'une ou plusieurs des revendications 1 à 3,
caractérisé en ce que,
dans le boîtier (1) les lamelles de serrage (1), formées à partir de celui-ci, sont séparées par des espaces libres (13), prévus chacun pour une lamelle intermédiaire (14) et que les espaces libres (13) sont comblés par des lamelles intermédiaires, adéquates, séparées (14).

5. Joint fileté selon la revendication 4,
caractérisé en ce que
les lamelles intermédiaires (14) assorties sont placées sur un élément supplémentaire, commun, en matière plastique.

6. Joint fileté selon la revendication 5,
caractérisé en ce que
l'élément supplémentaire en matière plastique présente une partie annulaire (15) commune à toutes les lamelles intermédiaires (14) et reliant celles-ci entre elles.

7. Joint fileté selon l'une ou plusieurs des revendications 1 à 6,
caractérisé en ce que
les surfaces frontales (7) sont planes.

8. Joint fileté selon l'une ou plusieurs des revendications 1 à 6,
caractérisé en ce que
les surfaces frontales sont courbes.

9. Procéde de fabrication d'un joint fileté selon l'une ou plusieurs des revendications 1 à 8,
caractérisé en ce que
le boîtier (1) est exécuté sous forme de pièce en matière plastique moulée par injection avec une zone annulaire à lamelles qui est divisée, en lamelles de serrage (5), par des coupes (16) exécutés dans le sens axial.

10. Procédé de fabrication d'un joint fileté selon l'une ou plusieurs des revendications 1 à 8,
caractérisé en ce que
le boîtier (1), d'une part, et les lamelles intermédiaires (14), d'autre part, sont fabriqués les unes après l'autre par moulage par injection de matière plastique à deux composants.
